# EUROPEAN PATENT APPLICATION

(11) **EP 3 562 107 A1**
(43) Date of publication of application: **30.10.2019**
(21) Application number: 17882326.6
(22) Date of filing: 25.12.2017
(51) Int. Cl.: H04L 12/761

(54) **BROADCAST PACKET PROCESSING METHOD AND PROCESSING APPARATUS, CONTROLLER, AND SWITCH**

(30) Priority: 23.12.2016 CN 201611205224
(71) Applicant: ZTE Corporation, Shenzhen, Guangdong 518057 (CN)
(72) Inventor: HU, Yongsheng, Shenzhen Guangdong 518057 (CN); WANG, Biao, Shenzhen Guangdong 518057 (CN); TANG, Yueping, Shenzhen Guangdong 518057 (CN)
(74) Representative: Regimbeau
(86) International application number: PCT/CN2017/118210
(87) International publication number: WO 2018/113792

(57) **Abstract**

Disclosed in the present invention are a broadcast packet processing method and processing apparatus, a controller, and a switch. The broadcast packet processing method comprises: a controller classifies, according to network configuration information, multiple switches and multiple user hosts existing on a network, into different virtual networks; the controller sets a broadcast tree for each virtual network, a root node of the broadcast trees being one of the multiple switches, branch nodes being at least one switch different from the switch, and leaf nodes being the user hosts and at least one of switch ports of virtual networks corresponding to the broadcast trees; and the controller generates, according to the broadcast trees, broadcast flow tables and broadcast group tables for each virtual network, and sends the broadcast flow tables and the broadcast group tables to the switches on the broadcast trees, so that each switch forwards received broadcast packets according to the broadcast flow tables and the broadcast group tables.

## Description

### TECHNICAL FIELD

The present invention relates to the field of communication and, in particular, to a broadcast packet processing method and processing apparatus, a controller, and a switch.

### BACKGROUND

In today's world, the network technology is rapidly changing. The conventional Internet based on the Transmission Control Protocol/Internet Protocol (TCP/IP) technology and other technologies are faced with more and more problems and challenges in service quality experience, service deployment, service adaptation and the like. The Software Defined Network (SDN) proposes that the centralized controller realizes the user customization on the forwarding plane device, and provides programmable application program interface (API) to the user to realize the flexible control of network behavior, which begins to become an important technical direction for the next generation of internet development.

A basic SDN network includes two main control entities, i.e., a network controller and a switch. In the SDN network, the functions of intelligent control in the conventional network is concentrated in a control network composed of network controllers, and an underlying switch does not have conventional network protocol controller unit, and merely forwards data according to instructions of the controllers. In such a way, the SDN network separates a control plane from a data plane of a network device, thereby achieving the flexible control of the network traffic and making the network serving as a pipeline more intelligent.

Due to the centralized control characteristic of the SDN architecture, the OpenFlow protocol adopted by the SDN architecture may solve the broadcast storm problem to a certain extent. However, in the current SDN architecture, the broadcast packet is generally processed by a conventional Ethernet network broadcast packet processing method, or by a processing method for the Address Resolution Protocol/Dynamic Host Configuration Protocol (ARP/DHCP) Ethernet broadcast packet. In the current SDN architecture, the existing Ethernet broadcast packet processing mechanism is simple and effective, but its resource overhead is large, and there are many potential safety hazards, thereby limiting the application of the Ethernet broadcast packet processing mechanism in a large-scale network. In addition, a loop may exist in the large-scale network, and the broadcast packet may easily cause a broadcast storm. In the existing optimization of the Ethernet broadcast packet processing for the above problems, extra processing burden and resource consumption are increased in the network controller, the switch and the terminal, and the load of the SDN controller is rapidly increased with the increase of the network broadcast packet.

### SUMMARY

The present invention provides a broadcast packet processing method and processing apparatus, a controller, and a switch, for solving following problems in the existing art: in the SDN architecture, the existing Ethernet broadcast processing mechanism has large resource overhead and many potential safety hazards, and the SDN controller has large load and easily causes a broadcast storm.

In one aspect, the present invention provides a broadcast packet processing method. The network includes a plurality of switches and a plurality of user hosts which communicate through the network. The method includes: dividing, by a controller, the plurality of switches and the plurality of user hosts into a plurality of virtual networks according to network configuration information; setting, by the controller, a broadcast tree for each virtual network, where a root node of the broadcast tree is one switch of the plurality of switches, a branch node is at least one switch different from the one switch in the plurality of switches, and a leaf node is at least one of user hosts or switch ports that are determined according to the network configuration information and belong to a virtual network corresponding to the broadcast tree; and generating, by the controller, a broadcast flow table and a broadcast group table for each virtual network according to the broadcast tree, and transmitting the broadcast flow table and the broadcast group table to each switch on the broadcast tree, so that each switch forwards a received broadcast packet according to the broadcast flow table and the broadcast group table. In another aspect, the present invention further provides a broadcast packet processing method. The method includes: receiving, by a switch, a broadcast flow table and a broadcast group table of a virtual network; when a broadcast packet is received, determining, by the switch, whether a virtual network to which the broadcast packet belongs is a virtual network in which the switch is located according to the broadcast flow table; in condition that the virtual network to which the broadcast packet belongs is the virtual network in which the switch is located, determining, by the switch, a forwarding port of the broadcast packet according to the broadcast group table; and forwarding, by the switch, the broadcast packet through the forwarding port.

In another aspect, the present invention provides a broadcast packet processing apparatus. The network includes a plurality of switches and a plurality of user hosts which communicate through the network. The apparatus includes: a dividing module, which is configured to divide the plurality of switches and the plurality of user hosts into a plurality of virtual networks according to network configuration information; a setting module, which is configured to set a broadcast tree for each virtual network, wherein a root node of the broadcast tree is one switch of the plurality of switches, a branch node is at least one switch different from the one switch in the plurality of switches, and a leaf node is at least one of user hosts or switch ports that are determined according to the network configuration information and belong to a virtual network corresponding to the broadcast tree; and a transmitting module, which is configured to generate a broadcast flow table and a broadcast group table for each virtual network according to the broadcast tree, and transmit broadcast flow tables and broadcast group tables for the plurality of virtual networks to each switch on the broadcast tree, so that each switch forwards a received broadcast packet according to the broadcast flow tables and the broadcast group tables.

In another aspect, the present invention further provides a controller, which includes any one of broadcast packet processing apparatuses described above.

In another aspect, the present invention further provides a switch. The switch includes: a receiving module, which is configured to receive a broadcast flow table and a broadcast group table of a virtual network; a judging module, which is configured to, when the receiving module receives a broadcast packet, determine whether a virtual network to which the broadcast packet belongs is a virtual network in which the switch is located according to the broadcast flow table; a determining module, which is configured to, in condition that the determining module determines that the virtual network to which the broadcast packet belongs is the virtual network in which the switch is located, determine a forwarding port of the broadcast packet according to the broadcast group table; and a forwarding module, which is configured to forward the broadcast packet through the forwarding port determined by the determining module.

In another aspect, the present invention further provides a broadcast packet processing method. The method includes: dividing, by a controller, a plurality of switches and a plurality of user hosts into a plurality of virtual networks to manage according to network configuration information, and setting a broadcast tree for each virtual network, where a root node of the broadcast tree is one switch of the plurality of switches, a branch node is at least one switch different from the switch serving as the root node, and a leaf node is at least one of user hosts or switch ports that are determined according to the network configuration information and belong to a virtual network corresponding to the broadcast tree; generating, by the controller, a broadcast flow table and a broadcast group table for each virtual network according to the broadcast tree, and transmitting the broadcast flow table and the broadcast group table to the switch; when the switch receives a broadcast packet, determining, by the switch, a virtual network to which the broadcast packet belongs according to the received broadcast flow table, and in condition that the virtual network to which the broadcast packet belongs is a virtual network in which the switch is located, forwarding the broadcast packet according to the received broadcast group table; and updating, by the controller, the broadcast tree when a network resource is updated, and inform the switch to update the broadcast flow table and the broadcast group table.

### BRIEF DESCRIPTION OF DRAWINGS

The drawings in the description of the present invention are used to provide a further understanding of the present invention, and form a part of the present application. The schematic embodiments and the descriptions thereof in the present invention are intended to explain the present invention, and do not limit the present invention in an improper way. In the drawings:
FIG. 1 is a flowchart of a broadcast packet processing method according to an embodiment of the present invention;
FIG. 2 is a flowchart of another broadcast packet processing method according to an embodiment of the present invention;
FIG. 3 is a structural diagram of a broadcast packet processing apparatus according to an embodiment of the present invention;
FIG. 4 is a structural diagram of another broadcast packet processing apparatus according to an embodiment of the present invention;
FIG. 5 is a structure diagram of a switch according to an embodiment of the present invention;
FIG. 6 is a schematic diagram of SDN network architecture according to an embodiment of the present invention;
FIG. 7 is a schematic diagram illustrating virtual network division according to an embodiment of the present invention;
FIG. 8 is a structural diagram of a virtual network broadcast tree according to an embodiment of the present invention;
FIG. 9 is a flowchart of a broadcast packet processing method based on the SDN architecture according to an embodiment of the present invention;
FIG. 10 is a flowchart of an update processing on a broadcast tree of a virtual network according to an embodiment of the present invention;
FIG. 11 is a flowchart of an update processing on a broadcast tree of a virtual network according to another embodiment of the present invention;
FIG. 12 is a flowchart of broadcast packet processing through a switch according to an embodiment of the present invention;
FIG. 13 is a structural diagram of a broadcast packet processing apparatus according to an embodiment of the present invention; and
FIG. 14 is a structural diagram of a broadcast packet forwarding apparatus according to an embodiment of the present invention.

### DETAILED DESCRIPTION

Currently, in the SDN architecture, the broadcast packet is processed by a conventional method for processing a broadcast packet through the Ethernet. For example, a model based on Spanning Tree Protocol (STP) is used to solve the loop problem. However, this model will cause the exponential increase of traffic load of the root node switch, and the multipath transmission advantages that may exist in the network cannot be used.

In the SDN architecture, the controller is based on a mechanism issued by a packet sending-forwarding flow table, so that in the SDN adopting the conventional Ethernet broadcast packet processing, a switch is generally adopted to send a broadcast packet to the controller through a PacketIn message, and the controller informs the switch to flood the broadcast packet at all ports through a PacketOut message. For a complex network topology environment, an intermediate switch repeats the transmitting process to achieve the broadcast effect in the whole network. Apparently, such a simple broadcast flooding may make the broadcast packet form loops in the network, resulting in the broadcast storm. In practice use, such a kind of broadcast packet processing is generally inhibited and optimized. For example, the switch is not told to flood the broadcast through the PacketOut message, but the packet is directly sent to all host access ports in the network through the PacketOut message. However, in the inhibition and optimization, the broadcast of the broadcast packet is actually implemented through an OpenFlow channel between the controller and the switch, and when there are a large number of host access ports in the network, the processing pressure of the controller may be greatly increased and the OpenFlow channel may be blocked.

In some cases, in the SDN architecture, the broadcast packet is processed by a conventional processing method for the ARP/DHCP Ethernet broadcast packet. In this processing method, for the broadcast packet itself, a node information dictionary for representing an information mapping relationship between a terminal and a switch forwarding node is maintained, and for ARP/DHCP broadcast packet sent by the controller, whether the broadcast packet is broadcasted by one switch is determined through the dictionary, so that the broadcast loop is prevented from being formed between switches. This solution may avoid the broadcast loop and the broadcast storm to a certain extent. However, the solution is not universal, and in the solution, the controller needs to establish a dictionary related to 'transmitting devices/ports that have transmitted the packet' for each broadcast packet, which put great pressure on the controller performance and the OpenFlow channel.

Therefore, how to improve the broadcast packet processing method and solve the loop problem becomes a focus of those who skilled in the industry.

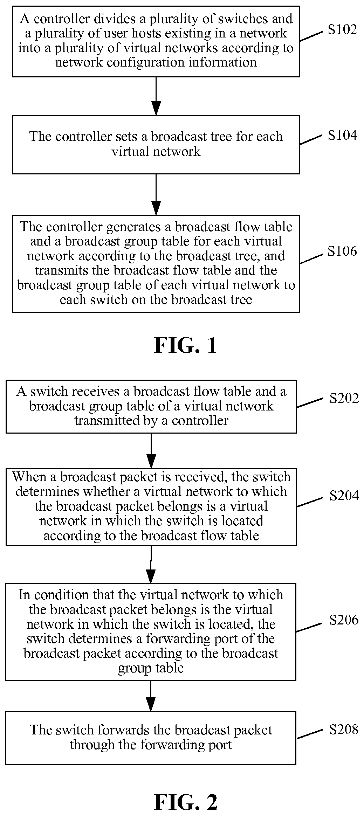

In order to at least solve following problems in the existing art: in the SDN architecture, the existing Ethernet broadcast processing mechanism has large resource overhead and many potential safety hazards, and the SDN controller has large load and easily causes a broadcast storm, the present invention provides a broadcast packet processing method and processing apparatus, a controller, and a switch. The present invention will be described hereinafter in detail in conjunction with the drawings and embodiments. It is to be understood that the embodiments described herein are intended to explain and not to limit the present invention. The present invention provides a broadcast packet processing method. The flow of the method is shown in FIG. 1, and the method includes steps S102, S104 and S106 described below.

In step S102, a controller divides multiple switches and multiple user hosts existing in a network into multiple different virtual networks according to network configuration information.

In step S104, the controller sets a broadcast tree for each virtual network, where a root node of the broadcast tree is one switch, a branch node is multiple switches different from the switch serving as the root node, and a leaf node is the user host and/or a switch port that is determined according to the network configuration information and belongs to a virtual network corresponding to the broadcast tree. In the subsequent process, the controller needs to maintain the change of the broadcast tree, so as to update a broadcast flow table and a broadcast group table that are transmitted to the switch according to the change of the broadcast tree. In some embodiments, the controller may set a broadcast tree for each virtual network according to the STP, and of course, may set the broadcast tree through other protocols.

In step S106, the controller generates a broadcast flow table and a broadcast group table for each virtual network according to the broadcast tree, and transmits the broadcast flow table and the broadcast group table of each virtual network to each switch on the broadcast tree, so that each switch forwards a received broadcast packet according to the broadcast flow table and the broadcast group table.

In this embodiment, the controller divides the switches and the user hosts into each virtual network, different virtual networks have a respective broadcast tree, and the broadcast flow table and the broadcast group table required by the virtual network may be determined according to the broadcast tree. When receiving the broadcast packet, the switch may determine a forwarding path of the broadcast packet by using the broadcast flow table and the broadcast group table sent by the controller. In the whole process, the controller does not need to inform the switch to flood the broadcast packet or directly transmit the packet, and merely needs to be responsible for maintaining the broadcast tree (for example, updating the broadcast tree). Therefore, the workload is small, and the broadcast storm may not be caused when the forwarding according to the broadcast flow table and the broadcast group table is performed, thereby solving the following problems in the existing art: in the SDN architecture, the existing Ethernet broadcast processing mechanism has large resource overhead and many potential safety hazards, and the SDN controller has a large load and easily causes the broadcast storm.

In some embodiments, the controller needs to detect whether an network resource update exists in each virtual network; and if the network resource update exists, the controller updates a broadcast tree for a virtual network in which the network resource is updated, so as to update the broadcast flow table and the broadcast group table sent to the switch according to the updated broadcast tree.

The network resource update may include changes of the network resource subject, such as going online/offline of the switch, the link addition or link deletion between switches, going online/offline or migration of the user host, addition or deletion of the user host, etc. The changed subject is different, and the process of updating the broadcast tree for the virtual network having the changed subject is also different. Some exemplary processes for updating the broadcast tree in different cases are described below.

In response to detecting that a user host is added, the controller determines corresponding network configuration information according to Media Access Control (MAC) information of the user host, and determines a virtual network in which the user host is located according to the network configuration information. The controller adds a corresponding port of a switch connected to the user host into the virtual network. The controller determines whether the switch is on a broadcast tree corresponding to the virtual network. In condition that the switch is not on the broadcast tree corresponding to the virtual network, the controller calculates the shortest path between the switch and the root node of the broadcast tree corresponding to the virtual network to add the switch into the broadcast tree according to the shortest path. In condition that the switch is on the broadcast tree corresponding to the virtual network, the controller updates the broadcast tree according to the added user host and the port added into the determined virtual network (e.g., adding the added user host and the port added to the virtual network into the broadcast tree).

In response to detecting that a direct link is added between two switches in the same virtual network, the controller determines whether a non-direct link exists between the two switches connected by the direct link. In condition that the non-direct link does not exist, the controller adds the direct link and a port associated with the direct link into the broadcast tree, and in condition that the non-direct link exists, the controller replaces the non-direct link in the broadcast tree with the direct link. In some embodiments, in the case that the non-direct link exists, the controller may also ignore the newly added direct link and not update the broadcast tree. Compared with the processing without updating the broadcast tree, the processing with updating the broadcast tree may reduce the number of layers of the broadcast tree and improve the broadcast efficiency.

In response to detecting that a user host is deleted, the controller deletes a corresponding port of a switch connected to the user host from the broadcast tree.

In response to detecting that a direct link between two switches in the same virtual network is deleted, the controller calculates the shortest path between a switch currently disconnected to a root node of the broadcast tree and the root node of the broadcast tree, and re-adds the switch disconnected to the root node of the broadcast tree into the broadcast tree according to the shortest path.

In response to detecting that a switch on the broadcast tree goes offline, the controller calculates the shortest path between each lower node of the switch currently going offline and a root node of the broadcast tree, and re-adds the each lower node of the switch into the broadcast tree according to the shortest path.

The present invention provides a broadcast packet processing method. The flow is shown in FIG. 2, and the method includes steps S202, S204, S206 and S208 described below.

In step S202, a switch receives a broadcast flow table and a broadcast group table of a virtual network transmitted by a controller.

In step S204, when a broadcast packet is received, the switch determines whether a virtual network to which the broadcast packet belongs is a virtual network in which the switch is located according to the broadcast flow table.

In step S206, in condition that the virtual network to which the broadcast packet belongs is the virtual network in which the switch is located, the switch determines a forwarding port of the broadcast packet according to the broadcast group table.

In step S208, the switch forwards the broadcast packet through the forwarding port.

For example, when any one switch on the broadcast tree branch receives the broadcast packet, each outward forwarding port of this switch is determined through the broadcast group table, and then the broadcast packet is forwarded through each forwarding port. In condition that another switch receives the broadcast packet, an outward forwarding port of the switch is similarly determined, and the broadcast packet is forwarded through the forwarding port similarly until the virtual network to which the broadcast packet belongs receives the broadcast packet completely. At this point, then the forwarding stops.

After receiving the broadcast flow table and the broadcast group table of the broadcast packet sent by the controller, the switch in this embodiment may determine whether the broadcast packet belongs to the current virtual network according to the broadcast flow table once the broadcast packet is received. Once the broadcast packet belongs to the current virtual network and needs to be forwarded, a port for forwarding the broadcast packet may be determined according to the broadcast group table. In this process, all operations are simple, so that the controller has a small burden, and the functions of the switch are fully used. The broadcast storm may not be caused when the forwarding is performed according to the broadcast flow table and the broadcast group table.

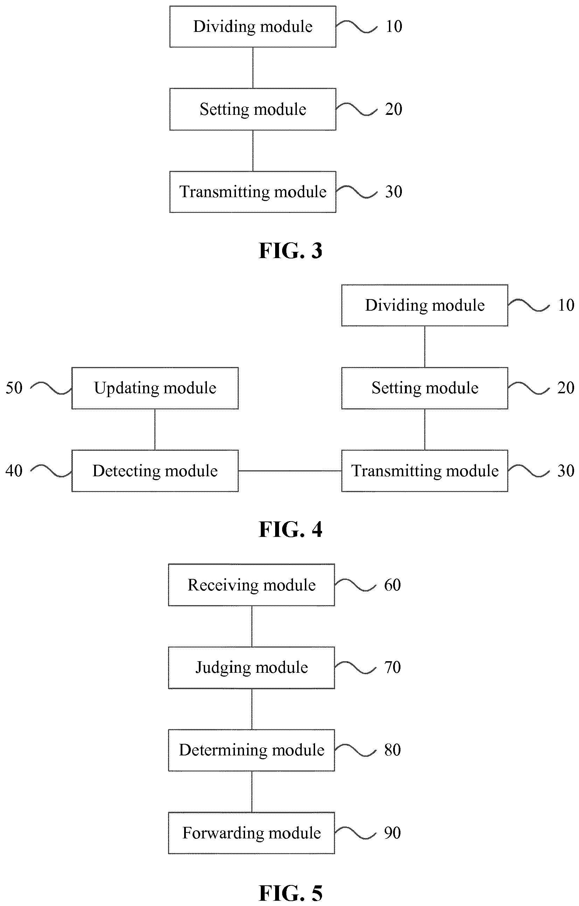

The present invention provides a broadcast packet processing apparatus. The apparatus may be disposed in the controller. The structural diagram of the apparatus is shown in FIG. 3, and the apparatus includes a dividing module 10, a setting module 20 and a transmitting module 30. The dividing module 10 is configured to divide multiple switches and multiple user hosts into multiple different virtual networks according to network configuration information. The setting module 20 is coupled with the dividing module 10 and is configured to set a broadcast tree for each virtual network, where a root node of the broadcast tree is a switch, a branch node is multiple switches different from the switch serving as the root node, and a leaf node is the user host and/or a switch port that is determined according to the network configuration information and belongs to a virtual network corresponding to the broadcast tree. The transmitting module 30 is coupled with the setting module 20 and is configured to generate a broadcast flow table and a broadcast group table for each virtual network according to the broadcast tree, and transmit the broadcast flow table and the broadcast group table of each virtual network to each switch on the broadcast tree, so that each switch forwards a received broadcast packet according to the broadcast flow table and the broadcast group table.

FIG. 4 shows a structural diagram of a broadcast packet processing apparatus according to an embodiment of the present invention. Referring to FIG. 4, the apparatus may further include a detecting module 40 and an updating module 50 in addition to all modules shown in FIG. 3. The detecting module 40 is coupled with the transmitting module 30 and is configured to detect whether a network resource update exists each virtual network. The updating module 50 is coupled with the detecting module 40 and is configured to, in condition that the detecting module 40 detects that the network resource update exists, update a broadcast tree for a virtual network in which the network resource is updated.

In some embodiments, the updating module 50 may include a determining unit, an adding unit, a first determining unit and a first updating unit. The determining unit is configured to, in response to detecting that a user host is added, determine corresponding network configuration information according to MAC information of the user host, and determine a virtual network in which the user host is located according to the network configuration information. The adding unit is configured to add a corresponding port of a switch connected to the user host into the virtual network that is determined by the determining unit. The first determining unit is configured to determine whether the switch is on a broadcast tree corresponding to the virtual network that is determined by the determining unit. The first updating unit is configured to, in condition that the first determining unit determines that the switch is not on the broadcast tree corresponding to the virtual network that is determined by the determining unit, calculate the shortest path between the switch and a root node of the broadcast tree corresponding to the virtual network, so as to add the switch into the broadcast tree according to the shortest path; and in condition that the first determining unit determines that the switch is on the broadcast tree corresponding to the virtual network that is determined by the determining unit, add the user host and the port added into the virtual network by the adding unit into the broadcast tree. In some embodiments, the updating module 50 may further include a second determining unit and a second updating unit. The second determining unit is configured to, in response to detecting that a direct link is added between two switches in the same virtual network, determine whether a non-direct link exists between the two switches connected by the direct link. The second updating unit is configured to, in condition that the second determining unit determines that the non-direct link does not exist, add the direct link and a port associated with the direct link into the broadcast tree, and in condition that the second determining unit determines that the non-direct link exists, replace the non-direct link in the broadcast tree with the direct link.

In some embodiments, the updating module 50 may further include a third updating unit. The third updating unit is configured to, in response to detecting that a user host is deleted, delete a corresponding port of a switch connected to the user host from the broadcast tree.

In some embodiments, the updating module 50 may further include a fourth updating unit. The fourth updating unit is configured to, in response to detecting that a direct link between two switches in the same virtual network is deleted, calculate the shortest path between a switch currently disconnected to a root node of the broadcast tree and the root node of the broadcast tree, and re-add the switch disconnected to the root node of the broadcast tree into the broadcast tree according to the shortest path.

In some embodiments, the updating module 50 may further include a fifth updating unit. The fifth updating unit is configured to, in response to detecting that a switch on the broadcast tree goes offline, calculate the shortest path between each lower node of the switch currently going offline and a root node of the broadcast tree, and re-add the each lower node of the switch into the broadcast tree according to the shortest path.

The present invention provides a switch. The switch may interact with the controller including the broadcast packet processing apparatus in the foregoing embodiments. The structural diagram of the switch is shown in FIG. 5, and the switch includes a receiving module 60, a judging module 70, a determining module 80 and a forwarding module 90. The receiving module 60 is configured to receive a broadcast flow table and a broadcast group table of a virtual network sent by a controller. The judging module 70 is coupled with the receiving module 60 and is configured to, when the receiving module 60 receives a broadcast packet, determine whether a virtual network to which the broadcast packet belongs is a virtual network in which the switch is located according to the broadcast flow table. The determining module 80 is coupled with the judging module 70 and is configured to, in condition that the judging module 70 determines that the virtual network to which the broadcast packet belongs is the virtual network in which the switch is located, determine a forwarding port of the broadcast packet according to the broadcast group table. The forwarding module 90 is coupled with the determining module 80 and is configured to forward the broadcast packet through the forwarding port determined by the determining module 80.

For the defects in the existing art, an embodiment of the present invention provides a method and a system for centralized processing of a broadcast packet broadcasted by Ethernet in a network, so as to reduce the pressure of an OpenFlow controller channel caused by the switch transmitting all broadcast packets to the controller, and reduce the performance pressure caused by the packet-by-packet broadcast processing of the controller.

According to one aspect of the embodiment, a method for centralized processing of a broadcast packet broadcasted by Ethernet in a network is provided. The method includes: dividing, by a controller, multiple switches and multiple hosts (user hosts) into multiple different virtual networks to manage according to network configuration information, and setting a broadcast tree for each virtual network, where a root node of the broadcast tree is one switch of the multiple switches, a branch node is at least one switch different from the switch serving as the root node, and a leaf node is the user host and/or a switch port that is determined according to the network configuration information and belongs to a virtual network corresponding to the broadcast tree; generating, by the controller, a broadcast flow table and a broadcast group table used for broadcasting a packet for each virtual network according to the broadcast tree, and transmitting the broadcast flow table and the broadcast group table to the switch; when the switch receives a broadcast packet of the user host or other switches, determining, by the switch, a virtual network to which the broadcast packet belongs according to the received broadcast flow table, and in condition that the virtual network to which the broadcast packet belongs is a virtual network in which the switch is located, forwarding the broadcast packet according to the received broadcast group table (e.g., copying and forwarding the broadcast packet via a port in the broadcast group table); and updating, by the controller, the broadcast tree when a network resource is updated, and inform the switch to update the broadcast flow table and the broadcast group table. The controller may update the broadcast tree in real time according to a network topology change, so as to process the broadcast packet based on a forwarding plane and reduce performance pressure caused by the packet-by-packet processing of the controller.

The network resource update refers to changes of the network resource subject, such as going online/offline of the switch, the link addition or link deletion between switches, going online/offline or migration of the host, addition or deletion of the user host, etc. The network configuration includes, but is not limited to: configuration for designating a virtual network to which the port belongs, or configuration for designating a virtual network to which the host belongs. The virtual network is a network composed of user hosts belonging to the virtual network and a part of switch network required for the interconnection of user hosts, a subset of the underlying physical network. The broadcast flow table is used for matching the broadcast packet or the layer 2 multicast packet, and controlling the switch through an instruction to copy and forward the packet in a broadcast group. The broadcast group table includes a list of switch ports belonging to the designated virtual network, and an instruction for packet encapsulation required for copying and forwarding the broadcast packet at the switch port.

In some embodiments, when the virtual network is split due to the network link update, the controller is allowed to construct a virtual root node and update the broadcast tree when the connectivity of the virtual network is restored. The controller may also optimize the broadcast tree at the time when the virtual network is changed or at the designated time, to mainly reduce branches of the broadcast tree and improve the broadcast efficiency. When the port in the broadcast group table includes an actual ingress port of the packet, the switch is required to automatically filter. That is, the switch is not allowed to copy and forward the original packet to the packet ingress port unless the packet is re-encapsulated.

Compared with the traditional Ethernet broadcast packet processing method adopted under the existing SDN architecture, in the broadcast packet processing method provided by the embodiments of the present invention, the switch does not need to send all broadcast packets to the controller, thereby avoiding the pressure of the OpenFlow channel; meanwhile, the controller does not need to process broadcast packets one by one or maintain the broadcast state, thereby reducing the performance pressure of the controller. Therefore, the present invention has a good prospect of wide application. The above process will be further described in conjunction with the drawings.

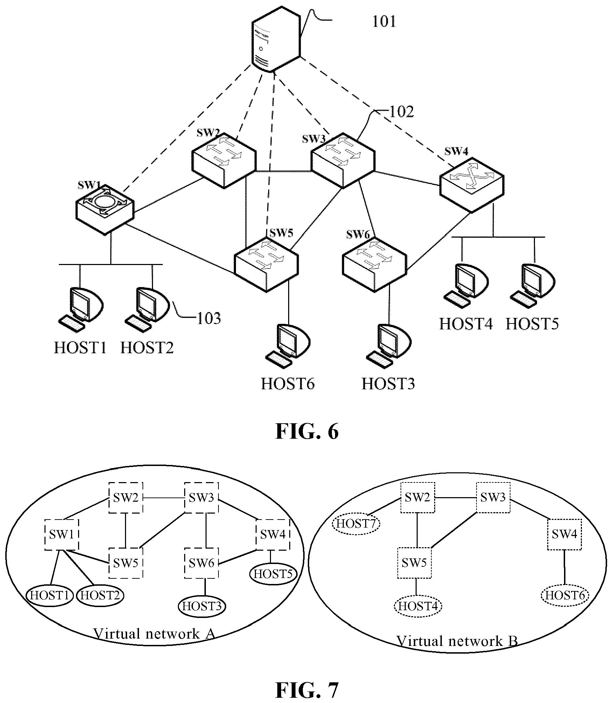

FIG. 6 is a schematic diagram of SDN network architecture according to an embodiment of the present invention. As shown in FIG. 6, one SDN network includes at least one controller 101, a forwarding plane network composed of multiple interconnected OpenFlow switches 102 (e.g., switches SW1 to SW6), and multiple user hosts 103 (e.g., HOST1 to HOST6).

In the SDN network, the controller is responsible for managing the network formed by OpenFlow switches and user hosts, including network resource management and network forwarding control. The network resource includes switch devices, host devices, network topologies, etc. The network forwarding control refers to that the controller selects a forwarding path for a host service packet reported by the OpenFlow switch, and sends a forwarding flow table to the related OpenFlow switch to assist the user hosts to complete data exchange.

The OpenFlow switch actively establishes a reliable connection to a controller node when the OpenFlow switch is powered on, and performs related operations such as security verification, basic information reporting and switch configuration. The OpenFlow switch is completely controlled by the controller, processes a received data packet according to the forwarding flow table sent by the controller, and reports a data message which has no hit in the search in the local flow table to the controller for processing.

The user host refers to a device for running client services, including a server that needs to access a network, a physical PC, a virtual machine, and various mobile devices. The management of the user host by the controller mainly includes: learning the position of the user host, positioning the position of the host according to a service request, and responding to the basic service requests of ARP, DHCP and the like of the user host.

FIG. 7 is a schematic diagram of virtual network division according to an embodiment of the present invention. Similar to the conventional two-layer or three-layer network model, the SDN network architecture also divides and isolates the physical network. Due to the characteristic of centralized control, the SDN network is easier to flexibly isolate the network.

As shown in FIG. 7, switches SW1 to SW6 and user hosts HOST1, HOST2, HOST3 and HOST5 form a virtual network A, and switches SW2 to SW5 and user hosts HOST4, HOST6 and HOST7 form a virtual network B. The virtual network includes two parts, user hosts and a part of switch network required for the interconnection of user hosts. It can be seen that the division of the virtual network is mainly determined by the user host. The specific division basis may be flexibly set in the SDN Network. For example, a manner similar to the conventional Virtual Local Area Network (VLAN) isolation method may be adopted. That is, switch ports where the user hosts HOST1, HOST2, HOST3 and HOST5 are located are divided into a first VLAN, and switch ports where the user hosts HOST4, HOST6 and HOST7 are located are divided into a second VLAN, so that the virtual network A and the virtual network B are obtained. In practical deployment, it is also easy to divide the user hosts in the same or different network segments into the same virtual network. Different user hosts may be in the same or different VLANs, such as a Virtual Data Center (VDC) providing private cloud or public cloud services. There is also a manner to divide the virtual network based on MAC information. That is, the user hosts designating the MAC information are divided into the designated virtual network.

In the SDN network, switches are interconnected through Fabric ports, and this part of the links is shared for all virtual networks. Paths between switches used by all user hosts forming the virtual network for forwarding the traffic as well as paths between switches and user hosts form the virtual network. Like the conventional network, in order to avoid network bandwidth waste, the broadcast packet and the layer 2 multicast packet need to be limited to be broadcasted in the virtual network. Therefore, in the SDN network, a controller is needed to control the broadcast packet forwarding or flooding.

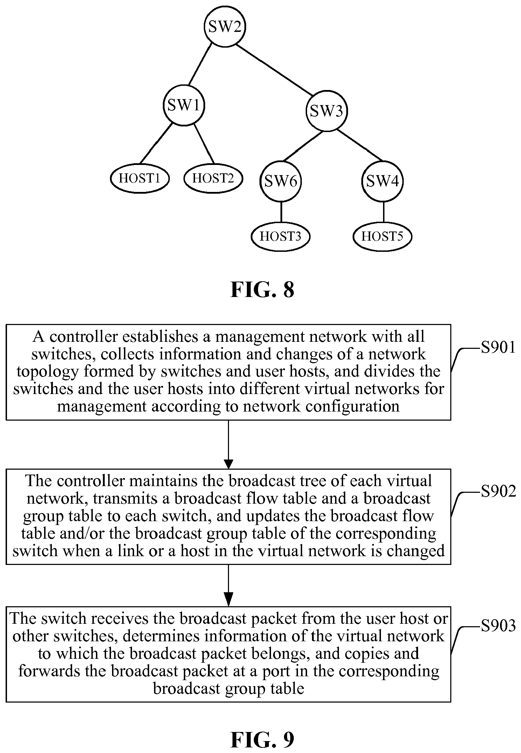

FIG. 8 is a structural diagram of a virtual network broadcast tree according to an embodiment of the present invention. In the preset invention, in order to implement the broadcast forwarding in the virtual network, the controller needs to generate and maintain a broadcast tree for each virtual network. The basic features of the broadcast tree are as follows: the root node and the branch node of the broadcast tree are switch devices, the leaf node is a user host and/or a switch port that is designated by network configuration and belongs to a virtual network corresponding to the broadcast tree, and all nodes are directly connected in a single-hop mode. In order to implement the broadcast packet copy in the virtual network, the controller sends the broadcast flow table and the broadcast group table to the root node and the branch node of the broadcast tree, and the switch receives the broadcast packet and copies and forwards the broadcast packet according to the broadcast flow table.

The contents of a broadcast flow table and a broadcast group table of a virtual network are shown in Table 1, which are examples of the broadcast flow table and the broadcast group table of the virtual network. In Table 1, the vnet field in the broadcast flow table is an identifier of the virtual network, the d_mac field is destination MAC information of a packet, and the group id is a multicast table identifier. The meaning of the broadcast flow table is to use designated multicast to process the broadcast packet of the virtual network 1. In the corresponding multicast table, the "type" is an OFGT_ALL which means that all buckets are processed within a group, and the buckets are switch ports that belong to the virtual network and are generated according to the broadcast tree.

Table 1 is a simplified description. In fact, in order to support the layer 2 multicast, the contents of the broadcast flow table may also be expressed as: the forwarding is performed according to the broadcast group table as long as the unicast packet is known. In actual implementation, for different port types (the encapsulation type and the like), a response packet encapsulation instruction and the like are also added in the content of the buckets.

**Table 1**

| Switch | Broadcast flow table | Broadcast group table |
|---|---|---|
| SW1 | Match: vnet=1, | group_id=10, |
| | d_mac=FF:FF:FF:FF:FF:FF | type= OFGT_ALL |
| | Action: apply group id=10 | buckets: {eth1,eth2,eth3} |
| SW2 | Match: vnet=1, | group_id=11, |
| | d_mac=FF:FF:FF:FF:FF:FF | type= OFGT_ALL |
| | Action: apply group_id=11 | buckets: {eth1,eth3} |
| SW3 | Match: vnet=1, | group_id=12, |
| | d_mac=FF:FF:FF:FF:FF:FF | type= OFGT_ALL |
| | Action: apply group_id=12 | buckets: {eth1,eth3,eth4} |
| SW4 | Match: vnet=1, | group_id=13, |
| | d_mac=FF:FF:FF:FF:FF:FF | type= OFGT_ALL |
| | Action: apply group_id=13 | buckets: {eth1,eth3} |
| SW6 | Match: vnet=1, | group_id=14, |
| | d_mac=FF:FF:FF:FF:FF:FF | type= OFGT_ALL |
| | Action: apply group_id= 14 | buckets: { eth2,eth3} |

FIG. 9 is a flowchart of a broadcast packet processing method based on the SDN architecture according to an embodiment of the present invention. According to the broadcast packet processing method based on the SDN architecture, in the process of network resource update, the controller maintains and updates the broadcast tree of the virtual network in real time and informs the switch to update the broadcast flow table and the broadcast group table, so that the switch is controlled to correctly copy and forward the broadcast packet. The method includes steps S901, S902 and S903.

In step S901, a controller establishes a management network with all switches, collects information and changes of a network topology formed by switches and user hosts, and divides the switches and the user hosts into different virtual networks for management according to network configuration.

The information and changes of the network topology include information, such as going online/offline of the switch, the link addition or link deletion between switches, going online/offline or migration of the user host, addition or deletion of the user host, etc. The network configuration refers to configuration of a virtual network to which a port belongs, or configuration of a virtual network to which a host belongs. The virtual network is a network composed of user hosts belonging to the virtual network and a part of switch network required for the interconnection of user hosts, a subset of the underlying physical network.

In step S902, the controller maintains the broadcast tree of each virtual network, transmits a broadcast flow table and a broadcast group table to each switch, and updates the broadcast flow table and/or the broadcast group table of the corresponding switch when a link or a host in the virtual network is changed.

The broadcast flow table is used for matching the broadcast packet or the layer 2 multicast packet, and controlling the switch through an instruction to copy and forward the packet in a broadcast group. The broadcast group table includes a list of switch ports belonging to the designated virtual network, and an instruction for packet encapsulation required for copying and forwarding the broadcast packet at the switch port.

In some embodiments, when the virtual network is split due to the network link update, the controller is allowed to construct a virtual root node and update the broadcast tree when the connectivity of the virtual network is restored. The controller may also optimize the broadcast tree at the time when the virtual network is changed or at the designated time, to mainly reduce branches of the broadcast tree and improve the broadcast efficiency.

In step S903, the switch receives the broadcast packet from the user host or other switches, determines information of the virtual network to which the broadcast packet belongs, and copies and forwards the broadcast packet at a port in the corresponding broadcast group table.

When the port in the broadcast group table includes an actual ingress port of the packet, the switch is required to automatically filter. That is, the switch is not allowed to copy and forward the original packet to the packet ingress port unless the packet is re-encapsulated.

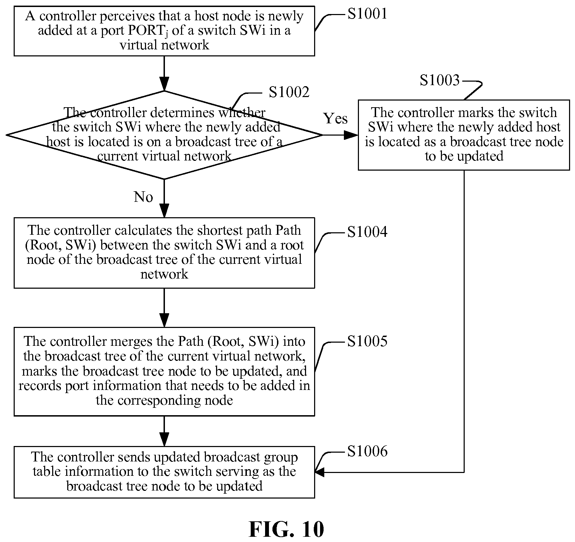

FIG. 10 is a flowchart of an update processing on a broadcast tree of a virtual network according to an embodiment of the present invention. When the controller perceives that a virtual host is newly added in the network and identifies a virtual network to which the virtual host belongs, the controller needs to update the broadcast group table on the corresponding switch, so that the newly added host or the port may receive and send the broadcast packet. The update processing may include steps S1101 to S1006.

In step S1001, a controller perceives that a host node is newly added at a port PORTⱼ of a switch SWi in a virtual network.

The controller may query corresponding network configuration through MAC information of the host node, and add the port PORTⱼ of the switch SWi into the virtual network.

In some embodiments, when the controller receives configuration for designating a virtual network to which the port PORTⱼ of the switch SWi belongs, the controller may also add the port PORTⱼ to the virtual network immediately, so that a user host connected to the port PORTⱼ may quickly receive the broadcast packet.

In step S1002, the controller determines whether the switch SWi where the newly added host is located is on a broadcast tree of a current virtual network, and if the switch SWi is not on the broadcast tree, go to step S1004; if the switch SWi is on the broadcast tree, go to step S1005.

In step S1003, the controller marks the switch SWi where the newly added host is located as a broadcast tree node to be updated, records the port PORTⱼ to be newly added into a broadcast group table, and jumps to step S1006 for processing.

In step S1004, the controller calculates the shortest path Path (Root, SWi) between the switch SWi and a root node of the broadcast tree of the current virtual network.

The shortest path between the switch SWi and the root node Root of the current broadcast tree may include multiple intermediate switches. For example, the Path (Root, SWi) is {Root, SWa, SWb, ..., SWi}, and some of switches may already appear on the broadcast tree.

In step S1005, the controller merges the Path (Root, SWi) into the broadcast tree of the current virtual network, marks the broadcast tree node to be updated, and records port information that needs to be added in the corresponding node.

Only branch nodes which need to be added to the broadcast tree need to be marked to merge the overlapped part of the shortest path Path (Root, SWi) and the current broadcast tree.

In step S1006, the controller sends updated broadcast group table information to the switch serving as the broadcast tree node to be updated.

When the controller sends the updated broadcast group table information to the switch, all contents of the broadcast group table may be re-sent, or only designated port information in the broadcast group table may be sent.

This embodiment describes a processing process of adding a leaf node newly in the virtual network. The process, in practice, is similar to a processing process of deleting a leaf node from the virtual network. The differences between these two processes are that, in the processing process of deleting a leaf node, tree nodes to be updated and port information to be deleted need to be recorded in step S1003 and step S1005, and the switch needs to be told to delete the port information from the broadcast group table in step S1006.

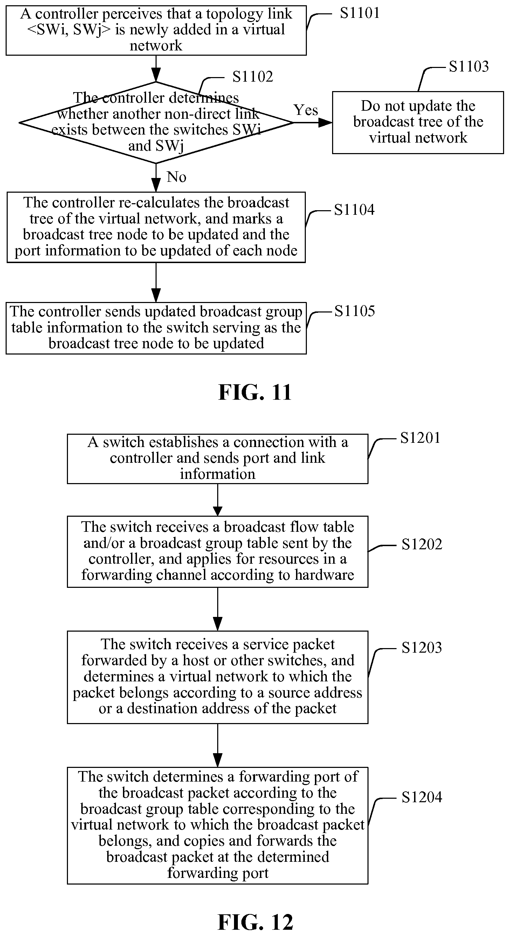

FIG. 11 is a flowchart of an update processing on a broadcast tree of a virtual network according to another embodiment of the present invention. When the controller perceives that a direct link is newly added between the switches SWi and SWj in the network, the controller needs to recalculate the broadcast tree of each virtual network, and sends updated broadcast group table information to the switch needing to update the broadcast group table, so that the broadcast packet may be copied to all leaf nodes in time. The update processing may include steps S1101 to S1105.

In step S1101, a controller perceives that a topology link <SWi, SWj> is newly added in a virtual network.

In step S1102, the controller determines whether another non-direct link exists between the switches SWi and SWj, and if it exists, go to step 1103; if it does not exist, go to step S1104.

In step S1103, if another non-direct link exists between switches SWi and SWj (step S1102: Yes), it means that the link does not affect the connectivity of the virtual network. At this point, the newly added link is a redundant path, the broadcast tree of the virtual network does not need to be updated, and the process ends.

In step S1104, in condition that no other non-direct link exists between switches SWi and SWj (step S1102: No), it means that the virtual network is split (which means that in the virtual network, there are two unreachable nodes), and the newly added network link may possibly repair the network split. The controller re-calculates the broadcast tree of the virtual network, and marks a broadcast tree node to be updated and the port information to be updated of each node.

In some embodiments, the controller may be configured to optimize the broadcast tree by reselecting root nodes and branch nodes when the network topology changes, to mainly reduce branches of the broadcast tree and improve the broadcast efficiency. For example, when the topology of the virtual network is changed from a linear topology to a star topology or a mesh topology, the optimization may reduce tree levels and improve the packet broadcast efficiency. In step S1105, the controller sends updated broadcast group table information to the switch serving as the broadcast tree node to be updated.

When the controller sends the updated broadcast group table information to the switch, all contents of the broadcast group table may be re-sent, or only designated port information in the broadcast group table may be sent.

In this embodiment, the link between the switches SWi and SWj is an underlying physical link, which may affect all virtual network topologies, so the controller needs to update the broadcast tree of each virtual network.

This embodiment describes a processing process of adding a link in the virtual network. The process, in practice, is similar to a processing process of deleting a link from the virtual network. The differences between these two processes are that, in the processing process of deleting a link, whether the deletion of the link causes the virtual network split needs to be determined in steps S1102 to S1104, and if the virtual network is split, the controller needs to maintain a virtual root node; and the controller needs to record tree nodes to be updated and port information to be deleted, and tell the switch to delete the port information from the broadcast group table in step S1105.

FIG. 12 is a flowchart of broadcast packet processing through a switch according to an embodiment of the present invention. After the controller sends the broadcast flow table and the broadcast group table, the switch may forward the broadcast packet according to the received broadcast flow table and the broadcast group table, and each broadcast packet does not need to be sent to the controller for processing, so that the processing pressure of the controller is reduced. The method may include steps S1201 to S1204.

In step S1201, a switch establishes a connection with a controller and sends port and link information. The controller may send or update the broadcast flow table and/or the broadcast group table to the related switch according to the aforementioned broadcast flow table and broadcast group table updating process.

In step S1202, the switch receives a broadcast flow table and/or a broadcast group table transmitted by the controller, and applies for resources in a forwarding channel according to hardware.

In step S1203, the switch receives a service packet forwarded by a host or other switches, and determines a virtual network to which the packet belongs according to a source address or a destination address of the packet.

The operation that the switch determines the virtual network to which the broadcast packet belongs is determined by the broadcast flow table sent by the controller. The operation that the switch determines a virtual network to which another packet belongs is determined by another flow table sent by the controller. For example, the controller generates a flow table according to a virtual network to which the port configured by the network belongs or according to a virtual network to which the host belongs, and the flow table is used for determining the virtual network to which the packet belongs according to the port or source MAC information.

In step S1204, the switch determines a forwarding port of the broadcast packet according to the broadcast group table corresponding to the virtual network to which the broadcast packet belongs, and copies and forwards the broadcast packet at the determined forwarding port.

After the switch receives the packet sent by a local user host, in condition that the packet is determined as a broadcast packet, the switch determines a virtual network to which the broadcast packet belongs, and then copies and forwards the packet to a local access port and a Fabric port of the virtual network to which the broadcast packet belongs according to a broadcast group table corresponding to the virtual network.

After the switch receives a service message forwarded by another switch from the Fabric port, in condition that the service packet is determined to be a broadcast packet, the switch determines a virtual network to which the broadcast packet belongs, and copies and forwards the packet to the local access port of the virtual network to which the broadcast packet belongs according to the broadcast group table corresponding to the virtual network.

In this embodiment, when the port in the broadcast group table includes an actual ingress port of the packet, the switch is required to automatically filter. That is, the switch is not allowed to copy and forward the original packet to the packet ingress port unless the packet is re-encapsulated.

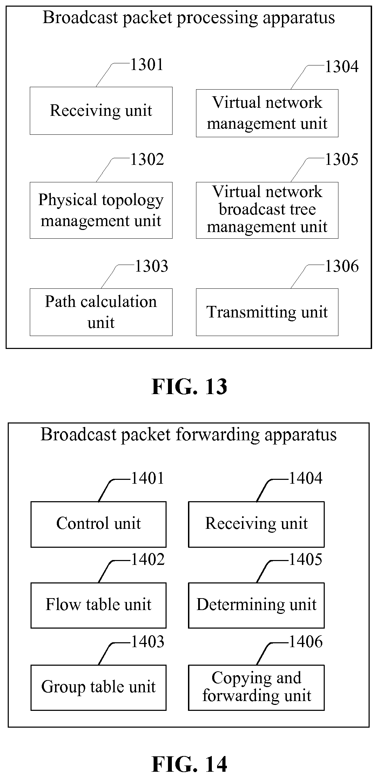

FIG. 13 is a structural diagram of a broadcast packet processing apparatus according to an embodiment of the present invention. As shown in FIG. 13, the apparatus is applied to a controller in the SDN architecture, and includes a receiving unit 1301, a physical topology management unit 1302, a path calculation unit 1303, a virtual network management unit 1304, a virtual network broadcast tree management unit 1305, and a transmitting unit 1306.

The receiving unit 1301 is configured to receive a connection request of a switch, switch resource information, and a user service packet sent by the switch. The physical topology management unit 1302 is configured to manage forwarding plane resources, including managing switch devices and ports, links between switches, user hosts, and location information. The path calculation unit 1303 is configured to calculate paths between switches. The virtual network management unit 1304 is configured to manage user host location information of each virtual network, e.g., maintaining user node location information of the virtual network according to virtual network configuration of a port or a host. The virtual network broadcast tree management unit 1305 is configured to manage a broadcast tree of a virtual network topology, update the broadcast tree when the network topology changes, and record a port change of a broadcast tree node. The transmitting unit 1306 is configured to send a command for creating and updating a broadcast flow table and a broadcast group table to the switch.

FIG. 14 is a structural diagram of a broadcast packet forwarding apparatus according to an embodiment of the present invention. As shown in FIG. 14, the apparatus is applied to a switch node of the SDN architecture, and includes a control unit 1401, a flow table unit 1402, a group table unit 1403, a receiving unit 1404, a determining unit 1405, and a copying and forwarding unit 1406.

The control unit 1401 is configured to establish a connection with a controller, and receive various control commands sent by the controller, including commands for creating and updating a broadcast flow table and a broadcast group table. The flow table unit 1402 is configured to create and manage a flow table of a forwarding channel of a switch. The group table unit 1403 is configured to create and manage multicast of the switch forwarding channel. The receiving unit 1404 is configured to receive packets from connection ports of a user host and other neighboring switches. The determining unit 1405 is configured to parse a user service packet, and perform a packet forwarding decision according to the flow table and user host information. The copying and forwarding unit 1406 is configured to copy and forward the packet.

In each embodiment of the present invention, in the process of network topology management, a controller divides switches and user hosts on a network into different virtual networks for management according to network configuration, maintains a broadcast tree for each virtual network, and sends a broadcast flow table and a broadcast group table to each switch serving as a broadcast tree node; and a switch copies and forwards a received broadcast packet at a corresponding forwarding port according to the broadcast flow table and the broadcast group table. According to the broadcast packet forwarding solution implemented by the present invention, the switch does not need to send all broadcast packets to the controller, thereby avoiding the pressure of the OpenFlow channel; meanwhile, the controller does not need to process broadcast packets one by one or maintain the broadcast state, thereby reducing the performance pressure of the controller.

Although the preferred embodiments of the present invention have been disclosed for illustrative purposes, those who skilled in the art will appreciate that various modifications, additions and substitutions are possible, and the scope of the present invention is not limit to the above mentioned embodiments.

## Claims

1. A broadcast packet processing method, wherein a network comprises a plurality of switches and a plurality of user hosts which communicate through the network, and wherein the method comprises:
dividing, by a controller, the plurality of switches and the plurality of user hosts into a plurality of virtual networks according to network configuration information;
setting, by the controller, a broadcast tree for each of the plurality of virtual networks, wherein a root node of the broadcast tree is one switch of the plurality of switches, a branch node is at least one switch different from the one switch in the plurality of switches, and a leaf node is at least one of user hosts or switch ports that are determined according to the network configuration information and belong to a virtual network corresponding to the broadcast tree; and
generating, by the controller, a broadcast flow table and a broadcast group table for the each of the plurality of virtual networks according to the broadcast tree, and transmitting broadcast flow tables and broadcast group tables for the plurality of virtual networks to each switch on the broadcast tree, so that the each switch forwards a received broadcast packet according to the broadcast flow tables and the broadcast group tables.

2. The method of claim 1, further comprising:
detecting, by the controller, whether a network resource update exists in the plurality of virtual networks; and
in condition that the network resource update exists, updating, by the controller, a broadcast tree for a virtual network in which the network resource is updated.

3. The method of claim 2, wherein the updating, by the controller, the broadcast tree for the virtual network in which the network resource is updated comprises: in response to detecting that a user host is added,
determining, by the controller, a virtual network in which the added user host is located; adding, by the controller, a corresponding port of a switch connected to the added user host into the determined virtual network;
determining, by the controller, whether the switch is on a broadcast tree corresponding to the determined virtual network;
in response to determining that the switch is not on the broadcast tree corresponding to the determined virtual network, calculating, by the controller, a shortest path between the switch and a root node of the broadcast tree corresponding to the determined virtual network, so as to add the switch into the broadcast tree according to the shortest path; and
in response to determining that the switch is on the broadcast tree corresponding to the determined virtual network, updating, by the controller, the broadcast tree according to the added user host and the port added into the determined virtual network.

4. The method of claim 2, wherein the updating, by the controller, the broadcast tree for the virtual network in which the network resource is updated comprises: in response to detecting that a direct link is added between two switches in a same virtual network,
determining, by the controller, whether a non-direct link exists between the two switches connected by the direct link;
in condition that the non-direct link does not exist, adding, by the controller, the direct link and a port associated with the direct link into the broadcast tree; and
in condition that the non-direct link exists, replacing, by the controller, the non-direct link in the broadcast tree with the direct link.

5. The method of claim 2, wherein the updating, by the controller, the broadcast tree for the virtual network in which the network resource is updated comprises:
in response to detecting that a user host is deleted, deleting, by the controller, a corresponding port of a switch connected to the user host from the broadcast tree.

6. The method of claim 2, wherein the updating, by the controller, the broadcast tree for the virtual network in which the network resource is updated comprises:
in response to detecting that a direct link between two switches in a same virtual network is deleted, calculating, by the controller, a shortest path between a switch currently disconnected to a root node of the broadcast tree and the root node of the broadcast tree, and re-adding the switch disconnected to the root node of the broadcast tree into the broadcast tree according to the shortest path.

7. The method of claim 2, wherein the updating, by the controller, the broadcast tree for the virtual network in which the network resource is updated comprises:
in response to detecting that a switch on the broadcast tree goes offline, calculating, by the controller, a shortest path between each lower node of the switch currently going offline and a root node of the broadcast tree, and re-adding the each lower node of the switch going offline into the broadcast tree according to the shortest path.

8. A broadcast packet processing method, comprising:
receiving, by a switch, a broadcast flow table and a broadcast group table of a virtual network;
when a broadcast packet is received, determining, by the switch, whether a virtual network to which the broadcast packet belongs is a virtual network in which the switch is located according to the broadcast flow table;
in condition that the virtual network to which the broadcast packet belongs is the virtual network in which the switch is located, determining, by the switch, a forwarding port of the broadcast packet according to the broadcast group table; and
forwarding, by the switch, the broadcast packet through the forwarding port.

9. A broadcast packet processing apparatus, wherein a network comprises a plurality of switches and a plurality of user hosts which communicate through the network, and the apparatus comprises:
a dividing module, which is configured to divide the plurality of switches and the plurality of user hosts into a plurality of virtual networks according to network configuration information;
a setting module, which is configured to set a broadcast tree for each of the plurality of virtual networks, wherein a root node of the broadcast tree is one switch of the plurality of switches, a branch node is at least one switch different from the one switch in the plurality of switches, and a leaf node is at least one of user hosts or switch ports that are determined according to the network configuration information and belong to a virtual network corresponding to the broadcast tree; and
a transmitting module, which is configured to generate a broadcast flow table and a broadcast group table for the each of the plurality of virtual networks according to the broadcast tree, and transmit broadcast flow tables and broadcast group tables for the plurality of virtual networks to each switch on the broadcast tree, so that the each switch forwards a received broadcast packet according to the broadcast flow tables and the broadcast group tables.

10. The apparatus of claim 9, further comprising:
a detecting module, which is configured to detect whether a network resource update exists in the plurality of virtual networks; and
an updating module, which is configured to, in condition that the detecting module detects that the network resource update exists, update a broadcast tree for a virtual network in which the network resource is updated.

11. The apparatus of claim 10, wherein the updating module comprises:
a determining unit, which is configured to, in response to detecting that a user host is added, determine a virtual network in which the added user host is located;
an adding unit, which is configured to add a corresponding port of a switch connected to the added user host into the virtual network that is determined by the determining unit;
a first determining unit, which is configured to determine whether the switch is on a broadcast tree corresponding to the virtual network that is determined by the determining unit; and
a first updating unit, which is configured to, in condition that the first determining unit determines that the switch is not on the broadcast tree corresponding to the virtual network that is determined by the determining unit, calculate a shortest path between the switch and a root node of the broadcast tree corresponding to the virtual network that is determined by the determining unit, so as to add the switch into the broadcast tree according to the shortest path;
and in condition that the first determining unit determines that the switch is on the broadcast tree corresponding to the virtual network that is determined by the determining unit, add the added user host and the port added into the virtual network by the adding unit into the broadcast tree.

12. The apparatus of claim 10, wherein the updating module comprises:
a second determining unit, which is configured to, in response to detecting that a direct link is added between two switches in a same virtual network, determine whether a non-direct link exists between the two switches connected by the direct link; and
a second updating unit, which is configured to, in condition that the second determining unit determines that the non-direct link does not exist, add the direct link and a port associated with the direct link into the broadcast tree, and in condition that the second determining unit determines that the non-direct link exists, replace the non-direct link in the broadcast tree with the direct link.

13. The apparatus of claim 10, wherein the updating module comprises:
a third updating unit, which is configured to, in response to detecting that a user host is deleted, delete a corresponding port of a switch connected to the user host from the broadcast tree.

14. The apparatus of claim 10, wherein the updating module comprises:
a fourth updating unit, which is configured to, in response to detecting that a direct link between two switches in a same virtual network is deleted, calculate a shortest path between a switch currently disconnected to a root node of the broadcast tree and the root node of the broadcast tree, and re-add the switch disconnected to the root node of the broadcast tree into the broadcast tree according to the shortest path.

15. The apparatus of claim 10, wherein the updating module comprises:
a fifth updating unit, which is configured to, in response to detecting that a switch on the broadcast tree goes offline, calculate a shortest path between each lower node of the switch currently going offline and a root node of the broadcast tree, and re-add the each lower node of the switch going offline into the broadcast tree according to the shortest path.

16. A controller, comprising the apparatus of any one of claims 9 to 15.

17. A switch, comprising:
a receiving module, which is configured to receive a broadcast flow table and a broadcast group table of a virtual network;
a judging module, which is configured to, when the receiving module receives a broadcast packet, determine whether a virtual network to which the broadcast packet belongs is a virtual network in which the switch is located according to the broadcast flow table;
a determining module, which is configured to, in condition that the determining module determines that the virtual network to which the broadcast packet belongs is the virtual network in which the switch is located, determine a forwarding port of the broadcast packet according to the broadcast group table; and
a forwarding module, which is configured to forward the broadcast packet through the forwarding port determined by the determining module.

18. A broadcast packet processing method, comprising:
dividing, by a controller, a plurality of switches and a plurality of user hosts into a plurality of virtual networks to manage according to network configuration information, and setting a broadcast tree for each virtual network, wherein a root node of the broadcast tree is one switch of the plurality of switches, a branch node is at least one switch different from the switch serving as the root node, and a leaf node is at least one of the user hosts and switch ports that are determined according to the network configuration information and belong to a virtual network corresponding to the broadcast tree;
generating, by the controller, a broadcast flow table and a broadcast group table for the each virtual network according to the broadcast tree, and transmitting the broadcast flow table and the broadcast group table to the switch;
when the switch receives a broadcast packet, determining, by the switch, a virtual network to which the broadcast packet belongs according to the received broadcast flow table, and in condition that the virtual network to which the broadcast packet belongs is a virtual network in which the switch is located, forwarding the broadcast packet according to the received broadcast group table; and
updating, by the controller, the broadcast tree when a network resource is updated, and inform the switch to update the broadcast flow table and the broadcast group table.
